# EUROPÄISCHE PATENTSCHRIFT

(11) **EP 0 639 321 B1**
(45) Veröffentlichungstag und Bekanntmachung des Hinweises auf die Patenterteilung: **20.05.1998**
(21) Anmeldenummer: 94110721.1
(22) Anmeldetag: 11.07.1994
(51) Int. Cl.: A01D 34/70

(54) **Vorrichtung zur Anzeige des Füllstandes im Fangkorb von Rasenmähern**
Fill indicator for collecting means of lawn mowers
Indicateur de remplissage pour réceptacle de ramassage de tondeuses à gazon

(30) Priorität: 19.08.1993 DE 9312463 U
(43) Veröffentlichungstag der Anmeldung: 22.02.1995
(73) Patentinhaber: WOLF-Geräte GmbH Vertriebsgesellschaft KG, D-57518 Betzdorf/Sieg (DE)
(72) Erfinder: Held, Peter, D-57584 Scheuerfeld (DE); Weid, Helmut, D-57520 Niederdreisbach (DE)
(74) Vertreter: Koch, Günther, Dipl.-Ing.

(56) Entgegenhaltungen:
- EP-A- 0 339 226
- DE-U- 9 310 940
- GB-A- 1 242 515
- GB-A- 2 101 864

## Beschreibung

Die Erfindung bezieht sich auf eine Vorrichtung der im Oberbegriff des Schutzansspruchs 1 angegebenen Gattung. Eine derartige Füllstandsanzeigevorrichtung ist beispielsweise durch die UK-PS-12 42 515 bekannt. Dabei wird die Klappe durch den Luftstrom nach außen gedrückt und sie fällt in die Öffnung zurück, wenn infolge des sich anfüllenden Fangkorbes der Luftwiderstand so groß wird, daß der die Anzeigevorrichtung durchsetzende Luftstrom nicht mehr zum Anheben der Klappe ausreicht. Damit hierbei die Klappe nicht durch Gras verstopft wird, muß der Fangkorb einen Zwischendeckel mit Luftdurchtrittslöchern aufweisen, der das Füllvolumen des Korbes beeinträchtigt.

Bei einer anderen Füllstandsanzeigevorrichtung gemäß der GB-A-2 101 864 ist im Deckel des Fangkorbes ein Luftschwimmkörper angeordnet, der durch die Druckdifferenz zwischen dem Inneren und dem Äußeren der Grasfangbox getragen wird.

Der Erfindung liegt die Aufgabe zugrunde, eine betriebssicher arbeitende, einfach aufgebaute und sicher erkennbare Füllstandsanzeigevorrichtung zu schaffen, die das Füllvolumen des Fangkorbes nicht beeinträchtigt und auf einfache Weise billig herstellbar und am Deckel eines Fangkorbes anbaubar ist, ohne daß es erforderlich wäre, den Fangkorb selbst in besonderer Weise auszugestalten.

Gelöst wird die gestellte Aufgabe durch die im Kennzeichnungsteil des Anspruchs 1 angegebenen Merkmale.

Die Füllstandsanzeige kann somit an jeder geeigneten Stelle sowohl am Fangkorb als auch an der Heckklappe eines Mähers auf einfache Weise angerastet werden. Die Anzeige ist durch das Gehäuse weitgehend abgeschlossen, so daß nur ein ganz geringer Luftvolumenstrom für die Funktion der Anzeige ausreichend ist.

Zweckmäßige Ausgestaltungen der Erfindung ergeben sich aus den Unteransprüchen. So kann beim Entleeren (Ausschütteln des Fangkorbes) durch dafür vorgesehene Austrittsöffnungen der im Innenraum des Anzeigegehäuses angesammelte Schmutz entfernt werden.

Nachstehend wird ein Ausführungsbeispiel der Erfindung anhand der Zeichnung beschrieben. In der Zeichnung zeigen:
- Fig. 1: eine Seitenansicht eines Fangkorbes eines Rasenmähers mit Füllstandsanzeigevorrichtung im Deckel,
- Fig. 2: eine Draufsicht auf den Fangkorb gem. Fig. 1,
- Fig. 3: einen Schnitt nach der Linie III-III gemäß Fig. 2 in größerem Maßstab,
- Fig. 4: eine Ansicht der Schwenkklappe der Füllstandsanzeigeanzeigevorrichtung,
- Fig. 5: einen Schnitt nach der Linie V-V gemäß Fig. 2 in größerem Maßstab.

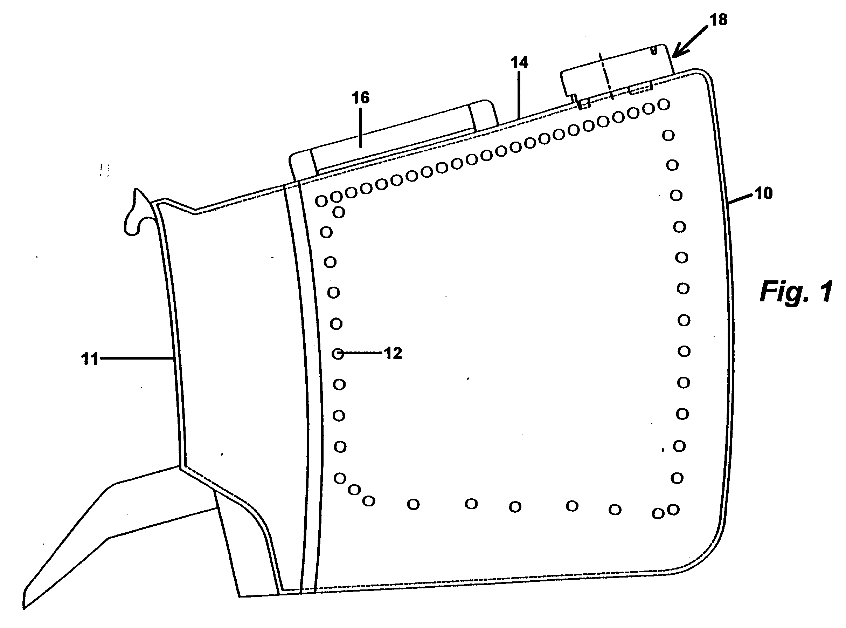

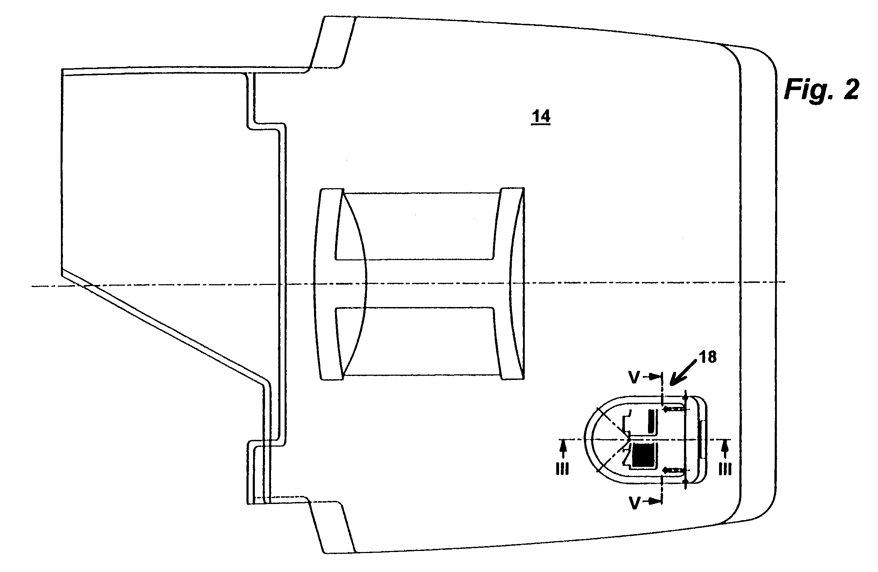

Die Fig. 1 und 2 zeigen einen Fangkorb 10, der an der Rückseite eines in der Zeichnung nicht dargestellten Rasenmähers anhängbar ist und in dessen Eintrittsöffnung 11 das geschnittene Gras durch einen Luftstrom gefördert wird. Der Fangkorb weist Luftaustrittsöffnungen 12 auf, durch die die Luft austreten kann, soweit diese LÖcher 12 nicht bereits von angesammeltem Gras bedeckt sind. Je weiter der Füllstand im Korb steigt, desto desto größer wird der Luftwiderstand. Strömungsgeschwindigkeit und Druck fallen ab. Auf diesem Umstand beruht die Funktion der erfindungsgemäßen Füllstandsanzeige 18, die im Deckel 14 angeordnet ist, der im vorderen Teil einen Handgriff 16 trägt. Die Füllstandsanzeigevorrichtung weist einen U-förmigen Rahmen 20 auf, dessen Schenkelenden durch eine Querwand 22 geschlossen sind, die in Fahrtrichtung hinten liegt. Der Rahmen weist zwei vordere Einstecklappen 24 und zwei hintere Rastnasen 26 auf, die in entsprechende Schlitze im Deckel 14 des Fangkorbes eingesteckt und durch die Elastizität des Materials verrastet sind (Fig. 5).

In dem vom Rahmen 20 umschlossenen Bereich weist der Deckel 14 Perforationslöcher 28 zum Luftdurchtritt auf. Gemäß dem dargestellten Ausführungsbeispiel sind diese Perforationslöcher 28 in mehreren konzentrischen Kreisen angeordnet.

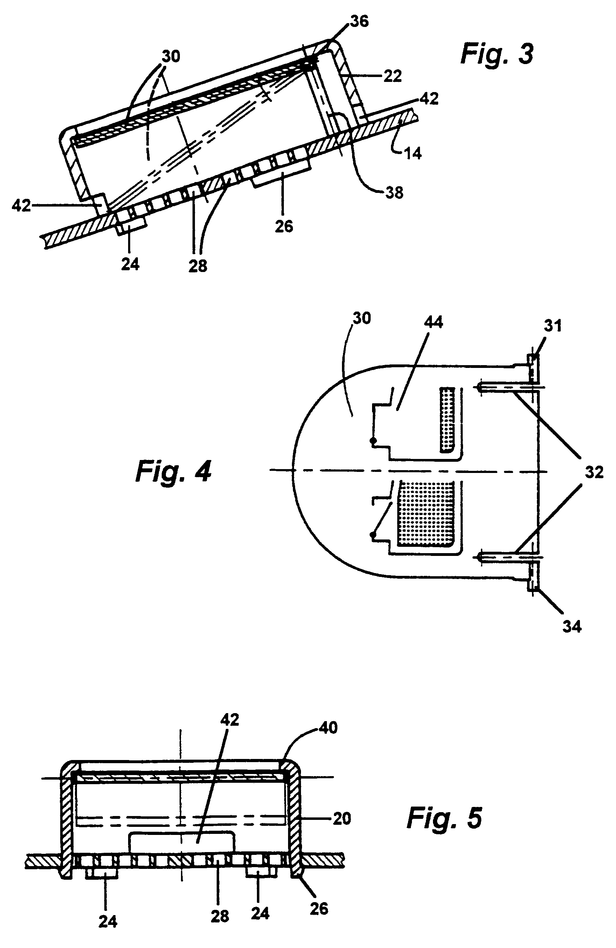

Den oberen Abschluß des Rahmens bildet eine Anzeigeklappe 30, die entsprechend der Form des U-Rahmens gestaltet ist, und zwei Einschnitte 32 am Rand aufweist, die Federzungen bilden, an deren Enden Achsstummel 34 angeformt sind. Diese Achsstummel 34 sind in Löcher 36 des Rahmens eingerastet, nach denen Führungsnuten 38 führen, die das Einrasten der Klappe erleichtern. Der U-Rahmen 20 und die Querwand 22 sind mit einem nach innen gezogenen Anschlagrand 40 versehen, an dem die Klappe in der Schließstellung anliegt, die in den Fig. 3 und 5 voll ausgezogen dargestellt ist. Durch Schwerkraft wird die Klappe in die in den Fig. 3 und 5 stichliert angedeutete Stellung überführt, in der sie dem Deckel mit ihrem Vorderende anliegt. Der vordere Teil des U-Rahmens und die hintere Querwand sind benachbart zum Deckel mit Auslaßschlitzen 42 versehen, durch die beim Entleeren des Fangkorbes jene vom Luftstrom durch die Perforationslöcher 28 eingeführten Schmutz- und Grasteilchen ausgeworfen werden.

Der Deckel trägt deutlich sichtbar Erklärungssymbolde, die dem Benutzer anzeigen, daß dann, wenn die Klappe aus der Schließstellung in die Öffnungsstellung übergeht, der Fangkorb sich seiner Füllstellung nähert.

Die Klappe ist in ihrem nach oben sichbaren und die Symbole tragenden Teil mit einer deutlich erkennbaren Signalfarbe versehen, damit die Stellung der Klappe deutlich erkennbar wird.

Die Vorrichtung arbeitet wie folgt:

In Ruhestellung und wenn der Mäher außer Betrieb ist, befindet sich die Klappe 30 in der in Fig. 3 und 5 strichpunktiert dargestellten Stellung, d.h. sie ist unter Schwerkraftwirkung im Gegenuhrzeigersinn gemäß Fig. 3 um die Achsstummel 36 verschwenkt. Wenn der Rasenmäher in Betrieb gesetzt wird, dann fördert ein von geeigneten Windflügeln erzeugter Luftstrom das geschnittene Gras über die Einlaßöffnung 11 in den Fangkorb hinein. Dieser Luftstrom tritt aus dem Fangkorb über die Öffnungen 12 und auch über die Öffnungen 28 im Füllstandsanzeiger aus und hebt die Klappe an. Je weiter der Füllstand im Fangkorb ansteigt, desto größer wird der Luftwiderstand und desto weniger werden demgemäß Luftgeschwindigkeit und Druck, bis bei befülltem Fangkorb der Druck soweit abgefallen ist, daß die Klappe 30 in die Öffnungsstellung abfällt und in dieser verbleibt, wodurch dem Benutzer angezeigt wird, daß der Fangkorb einer Leerung bedarf. Ein wiederholtes Verschwenken der Klappe, d.h. ein Flattern, kann auf die sich vollendende Füllung hinweisen.

Wenn etwa aus Kostengründen oder dergleichen auf eine Füllstandsanzeige verzichtet werden soll, dann kann anstelle des U-Rahmens 20 ein nicht dargestellter Deckel in die Rastlöcher eingerastet werden, der die Perforationslöcher 28 bedeckt und dem Deckel flach anliegt.

Die erfindungsgemäße Füllstandsanzeigevorrichtung kann auf einfache Weise auch noch nachträglich an Fangkörben angebaut werden, indem entweder der zuletzt erwähnte Abschlußdeckel durch einen Einsteckrahmen mit Klappe ersetzt wird. Es soll auch vorbehalten werden, Füllstandsanzeigevorrichtung derart mit Schraubbefestigungsgliedern auszurüsten, daß der Benutzer in der Lage ist, diese Füllstandsanzeige selbst nachträglich auf einem Fangkorb anzubringen, wobei es lediglich erforderlich wäre, innerhalb des Rahmenbereiches in den Deckel einzubohren.

Der in der Zeichnung dargestellte Fangkorb und die Füllstandsanzeigevorrichtung bestehen aus elastischem Kunststoff, es könnte jedoch auch anderes Material vorgesehen werden.

### Bezugszeichenliste

- 10: Fangkorb
- 11: Eintrittsöffnung
- 12: Luftaustrittslöcher
- 14: Deckel
- 16: Handgriff
- 18: Füllstandsanzeiger
- 20: U-Rahmen
- 22: Querwand
- 24: Einstecklappen
- 26: Rastnasen
- 28: Perforationslöcher
- 30: Anzeigeklappe
- 32: Einschnitte
- 34: Achsstummel
- 36: Löcher
- 38: Nut
- 40: Anschlagrand
- 42: Auslaßschlitz
- 44: Symbol

## Patentansprüche

1. Vorrichtung zur Anzeige des Füllstandes im Fangkorb (10) von Rasenmähern, bei denen das geschnittene Gras durch einen Luftstrom in den Fangkorb gefördert wird, von dem ein Teilstrom eine mit einer Klappe (30) versehene Öffnung (28) durchströmt, wobei der vom Füllstand abhängige Luftdruck die Schwenkstellung der Klappe bestimmt, dadurch gekennzeichnet, daß die Klappe (30) in einem Rahmen (20,22) gelagert ist , der mit Rastnasen (24),26) in Rastausnehmungen des Fangkorbdeckels (14) einrastbar ist, die um die Luftdurchtrittsöffnung (28) herum angeordnet sind.

2. Vorrichtung nach Anspruch 1,
dadurch gekennzeichnet, daß der Rahmen (20) U-förmig und durch eine Querwand (22) geschlossen ist und die Gelenkachse die Enden der U-Schenkel verbindet.

3. Vorrichtung nach den Ansprüchen 1 und 2,
dadurch gekennzeichnet, daß der Rahmen (20,22) an dem dem Fangkorbdeckel (14) anliegenden Rand mit wenigstens einer Auslaßöffnung (42) versehen ist.

4. Vorrichtung nach Anspruch 3,
dadurch gekennzeichnet, daß vorn und hinten je eine Öffnung (42) vorhanden ist.

5. Vorrichtung nach einem der Ansprüche 1 - 4,
dadurch gekennzeichnet, daß der U-Rahmen einen Anschlagrand (40) für die Klappe (30) aufweist.

6. Vorrichtung nach Anspruch 1,
dadurch gekennzeichnet, daß der Fangkorbdeckel (14) im hinteren Teil ein konzentrisches Lochmuster (28) aufweist.

7. Vorrichtung nach Anspruch 1 ,
dadurch gekennzeichnet, daß die Klappe im Scharnierbereich Einschnitte (32) aufweist, welche Federzungen bilden, die Schiernierachsstummel (34) tragen.

8. Vorrichtung nach Anspruch 1,
dadurch gekennzeichnet, daß die Schwenkachse der Klappe (30) quer zur Fahrtrichtung verläuft und in Fahrtrichtung hinten im Rahmen angelenkt ist.

9. Vorrichtung nach einem der Ansprüche 1 - 8,
dadurch gekennzeichnet, daß die Klappe (30) an der Oberseite Kennzeichnungssymbole (44) trägt.

10. Vorrichtung nach Anspruch 1,
dadurch gekennzeichnet, daß ein auf den Fangkorbdeckel aufrastbarer fester Verschlußdeckel die Perforationslöcher abdeckt

## Claims

1. Device for indicating the level in the grassbox (10) of lawn-mowers in which the cut grass is carried, by means of an air flow, into the grassbox, from which part of the flow flows through an aperture (28) provided with a flap (30), with the air pressure depending on the level determining the swivel position of the flap, distinguished by the fact that the flap (30) is housed in a frame (20, 22), which can be locked into locking recesses of the grassbox cover (14) with locking catches (24, 26), the recesses being arranged around the air throughput aperture (28).

2. Device as Claim 1,
distinguished by the fact that the frame (20) is U-shaped, and is closed off by a transverse wall (22), and the articulated axle links the ends of the U-sides.

3. Device as Claims 1 and 2,
distinguished by the fact that the frame (20, 22) is provided with at least one outlet aperture (42) on the edge adjacent to the grassbox cover (14).

4. Device as Claim 3,
distinguished by the fact that an aperture (42) is provided at the front and one at the rear.

5. Device as one of Claims 1-4,
distinguished by the fact that the U-frame has a rigid edge (40) for the flap (30).

6. Device as Claim 1,
distinguished by the fact that the grassbox cover (14) has a concentric bore pattern (28) at the back.

7. Device as Claim 1,
distinguished by the fact that the flap has flat indents (32) in the hinge area, which form spring contact studs which carry hinge axle stubs (34).

8. Device as Claim 1,
distinguished by the fact that the swivelling axis of the flap (30) runs transversely to the direction of travel and is linked into the frame at the rear (in relation to the direction of travel).

9. Device as one of Claims 1-8,
distinguished by the fact that the flap (30) carries identification symbols (44) on the top face.

10. Device as Claim 1,
distinguished by the fact that a closure cover, which can be locked onto the grassbox cover, covers the perforation bores.

## Revendications

1. Dispositif indicateur du niveau de remplissage du bac de ramassage (10) de tondeuses à gazon sur lesquelles l'herbe coupée est transportée par un flux d'air dans le bac de ramassage, une partie de ce flux d'air traversant une ouverture (28) munie d'un volet (30), la position angulaire du volet étant déterminée par la pression de l'air qui est fonction du niveau de remplissage, caractérisé par le fait que le volet (30) est monté pivotant dans un cadre (20, 22) susceptible d'être fixé par encliquetage à l'aide de nez d'encliquetage (24, 26) dans des évidements d'encliquetage du couvercle (14) du bac de ramassage, disposés autour de l'ouverture de passage d'air (28).

2. Dispositif suivant la revendication 1, caractérisé par le fait que le cadre (20) est conformé en U et est fermé par une paroi transversale (22), et que l'axe d'articulation relie les extrémités des branches du U.

3. Dispositif suivant les revendications 1 et 2, caractérisé par le fait que le cadre (20, 22) présente au moins une ouverture de sortie (42) au bord appliqué contre le couvercle (14) du bac de ramassage.

4. Dispositif suivant la revendication 3, caractérisé par le fait qu'une ouverture (42) est prévue respectivement à l'avant et à l'arrière.

5. Dispositif suivant l'une des revendications 1 à 4, caractérisé par le fait que le cadre en U présente un rebord de butée (40) pour le volet (30).

6. Dispositif suivant la revendication 1, caractérisé par le fait que le couvercle (14) du bac de ramassage présente, dans la partie arrière, des trous (28) disposés suivant des cercles concentriques.

7. Dispositif suivant la revendication 1, caractérisé par le fait que le volet présente dans la zone de charnière des encoches (32) formant des languettes élastiques qui portent des bouts d'axe de charnière (34).

8. Dispositif suivant la revendication 1, caractérisé par le fait que l'axe de pivotement du volet (30) est orienté transversalement à la direction de marche et est disposé sur le cadre à l'arrière par rapport au sens de marche.

9. Dispositif suivant l'une des revendications 1 à 8, caractérisé par le fait que le volet (30) porte des symboles figuratifs (44) sur le côté supérieur.

10. Dispositif suivant la revendication 1, caractérisé par le fait qu'un couvercle de fermeture pouvant être rapporté par encliquetage sur le couvercle du bac de ramassage recouvre les trous.
